# EUROPEAN PATENT SPECIFICATION

(11) **EP 3 676 432 B1**
(45) Date of publication and mention of the grant of the patent: **14.07.2021**
(21) Application number: 18755847.3
(22) Date of filing: 24.08.2018
(51) Int. Cl.: D03D 51/34, D03D 47/30, B65H 63/06, G01N 21/89

(54) **SENSOR SYSTEM FOR A WEAVING MACHINE**
SENSORSYSTEM FÜR EINE WEBMASCHINE
SYSTÈME DE CAPTEUR POUR MÉTIER À TISSER

(30) Priority: 31.08.2017 BE 201700118
(43) Date of publication of application: 08.07.2020
(73) Proprietor: Picanol, 8900 Ieper (BE)
(72) Inventor: WUYTS, Elise, 8800 Oekene (BE); DECONINCK, Filip, Veurne 8630 (BE)
(74) Representative: Arnold & Siedsma
(86) International application number: PCT/EP2018/072915
(87) International publication number: WO 2019/042896

(56) References cited:
- EP-A2- 0 197 763
- GB-A- 1 428 757
- JP-A- H 073 584
- US-A- 4 384 596

## Description

### Field of Invention

The invention relates to a sensor system for sensing a weft thread that is being inserted. Also, the invention relates to a weaving machine comprising such a sensor system.

### Background

Sensor systems for sensing the presence of a weft thread in a guide channel, such as a guide channel of a reed, are known.

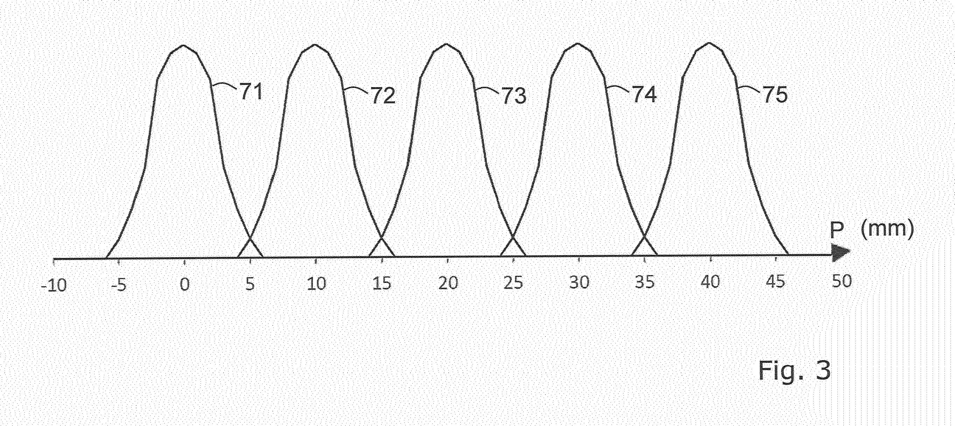

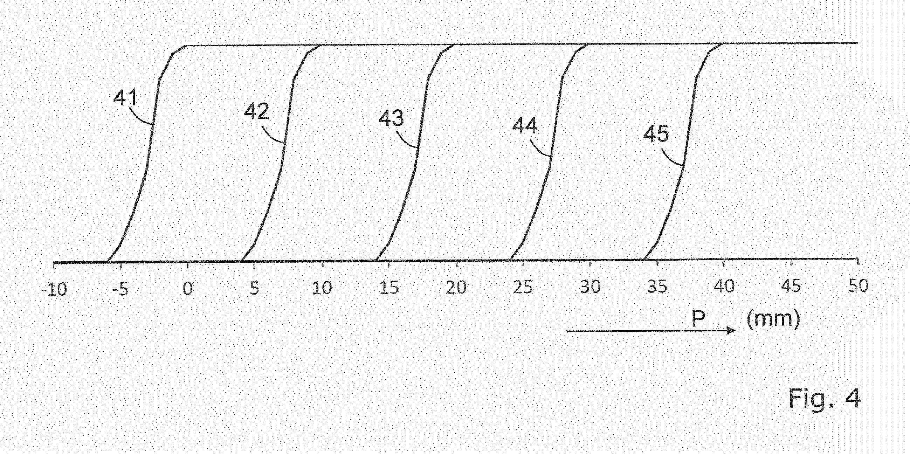

For example, US 5,329,961 B1 in the name of the Applicant discloses a reed for a weaving machine and an optical weft detector which includes a light emitter and a light receiver for picking up light reflected by a weft thread inserted in a guide channel formed by dents of the reed. The optical weft detector is mounted on the side of the reed which faces away from the guide channel and outside the dents. As shown in figures 3 and 4, the light emitters emit a divergent light beam with a specific angle of divergence, as a result of which the guide channel is illuminated. A weft thread inside the guide channel reflects a light beam to the light receiver. Although such a weft detector can perform a good sensing of a weft thread, it is rather complex to add the weft detector to the weaving machine and the accuracy of the sensing is limited.

Further, US 4,158,372, also in the name of the Applicant, discloses a process for watching the weft thread of weaving machines. Figure 4 shows an embodiment of a light emitter reflector receiver. The light emitter reflector receiver comprises a light diode, also referred to as light emitting diode or LED, which emits a concentrated beam of light towards the reflector. This beam of light is reflected and returns as a pencil of light in the same direction, almost parallel with the light beam of the light diode. The reflected pencil of light is picked up by photo-transistors which are coupled parallel with the light diode, and thus receive the reflected pencil of light. In this embodiment, a slight darkening or a reduction of intensity of the emitted light or reflected pencil will produce a signal allowing to detect the presence of a weft thread. In such an embodiment, a reflector is needed which makes the system more difficult to integrate in a weaving machine.

An alternative sensor system is described in US 4,738,284 which discloses a light reflection type weft detection apparatus for use in an air-jet weaving machine. The sensor system is made up of the supporting plate and a pair of supporting pieces. A light emitting element is embedded in the end of a first supporting piece, and the light receiving element is embedded in the end of another supporting piece.

EP 0 197 763 A2 discloses a method of monitoring for contaminants in highly elongate textile product such as yarn includes diffusely applying light to the yarn and monitoring light reflected by the yarn. The yarn is drawn past a background therefor and light is diffusely applied to both the yarn and said background. To that end four lamps are replaceably fitted within the body of a sensor head. Mounted in an axial bore of the sensor head is a photodetector to detect reflected light.

US4,384,596 discloses a first sensor which retroreflectively senses filling yarn as it egresses from an air containment element. The first sensor, placed along the length of the air containment tube, together with a second sensor outboard of the shed is used to discriminate filling yarn condition and the impact of those conditions on fabric quality. Signals from the first and second sensors are employed to control the stopping of the loom.

### Summary

The invention aims to provide a sensor system for sensing a weft thread, which is compact, easy to add on an existing weaving machine, and which allows for an accurate detection of a weft thread that is being inserted in a weft insertion direction.

According to a first aspect of the invention there is provided a sensor system for sensing a weft thread that is being inserted in a weft insertion direction, in at least a first zone, said sensor system having the features of claim 1. The sensor system comprises a plurality of light emitters, and one or more light receivers. The plurality of light emitters comprises at least a first and a second light emitter configured for emitting light in the first zone where the weft thread needs to be detected. The first light emitter and the second light emitter are located at a distance from each other, seen in the weft insertion direction. The one or more light receivers comprise at least a first light receiver. The first light receiver is configured for receiving light from the first and the second light emitter which has been reflected by a weft thread in the first zone. The first light receiver is located, seen in the weft insertion direction, between the first light emitter and the second light emitter.

Embodiments are based on the inventive insight that by using two light emitters to emit light in the first zone in combination with a suitably positioned first light receiver to detect light reflected by the weft thread, a very compact sensor system may be obtained which is easy to add on an existing weaving machine. Further, since reflected light is used, the sensor system may be mounted adjacent to a guide channel in which the weft thread is inserted, for example a guide channel of a reed of a weaving machine. The specific set-up of the first and second light emitter and of the first light receiver will allow the detection to be substantially independent of vibrations of the weaving machine, and in particular substantially independent of vibrations of a reed of the weaving machine. Also, by using a first light receiver, which is located, seen in the weft insertion direction, between the first light emitter and the second light emitter, the accuracy of the detection can be improved. Indeed, such a more or less symmetrical set-up will allow obtaining an improved collector efficiency compared to prior art sensor systems.

According to an exemplary embodiment, the first light receiver is located opposite the first zone, and the first and second light emitter are arranged substantially symmetrical with respect to a plane perpendicular to the weft insertion direction through the first zone. In that manner, the collector efficiency will be highest for light reflected by a piece of a weft thread present in the first zone and will decrease relatively fast for a piece of a weft thread present before and after the first zone, seen in the weft insertion direction, resulting in a relatively narrow first zone with a high collector efficiency, and hence, an improved accuracy.

Preferably, the plurality of light emitters and the one or more light receivers are provided on a common base, wherein the plurality of light emitters and the one or more light receivers are provided as building blocks which can be removably fixed on the common base. In that manner a modular sensor system can be obtained, which can be put together depending on the needs of the user. More in particular, the number of light receivers and light emitters can be determined in function of the desired length, this means the number of subsequent zones, over which the detection needs to be performed.

The second light emitter is further configured for emitting light in a second zone where the weft thread needs to be detected, the second zone being located downstream of the first zone, seen in the weft insertion direction. The sensor system comprises a third light emitter and a second light receiver. The third light emitter is configured for emitting light in the second zone. The second light emitter and the third light emitter are located at a distance from each other, seen in the weft insertion direction. The second light receiver is configured for receiving light from the second and the third light emitter which has been reflected by a weft thread in the second zone. The second light receiver is located, seen in the weft insertion direction, between the second light emitter and the third light emitter.

By having a third light emitter and a second light receiver, a further detection can be done in a second zone. In other words, in that manner it can be detected when a weft thread enters a first zone, and when the weft thread enters a second subsequent zone, or vice versa. Thus, by using three light emitters and two light receivers a very accurate detection can be done in two subsequent zones. In that manner it becomes possible to detect in real time the actual position of the leading end of a weft thread along a plurality of subsequent zones. This will make it possible to monitor the stretching process of a weft thread on a weaving machine. In other words, in such an embodiment, the sensor system may be implemented as a "way of stretching" sensor system capable to monitor the stretching process of the weft thread at a downstream end of the guide channel through which the weft thread passes.

In a preferred embodiment of a sensor system with a second light receiver, the second light receiver is located opposite the second zone, and the second and the third light emitter are arranged symmetrical with respect to a plane perpendicular to the weft insertion direction through the second zone. In other words, the plurality of light emitters and light receivers may be arranged in the following order: first light emitter, first light receiver, second light emitter, second light receiver, third light emitter. Such an arrangement can be continued depending on the length of the subsequent zones where the weft thread needs to be detected.

More generally, in a preferred embodiment, the sensor system comprises a plurality of light receivers and a plurality of light emitters. The plurality of light receivers comprises at least two light receivers including the first and the second light receiver, more preferably at least three light receivers, and even more preferably, at least four light receivers. The plurality of light emitters comprises at least three light emitters including the first, the second and the third light emitter, more preferably at least four light emitters, and even more preferably at least five light emitters. Seen in the weft insertion direction, the plurality of light receivers and the plurality of light emitters are preferably arranged such that each light receiver is positioned between two light emitters, and each light emitter, except for the first and the last light emitter, is positioned between two light receivers.

Preferably the plurality of light emitters and the plurality of light receivers are provided on a common base, more preferably in a "plug-and-play" manner, wherein a light emitter and a light receiver are provided as building blocks which can be removably fixed on the common base.

In an exemplary embodiment, the sensor system further comprises a controller which is operatively connected to the first light receiver and the second light receiver. Preferably, the controller is configured to determine a first moment corresponding to the moment when the presence of a leading end of the weft thread is detected by the first light receiver in the first zone, and a second moment corresponding to the moment when the presence of a leading end of the weft thread is detected by the second light receiver in the second zone. Of course, if more than two light receivers are present, a corresponding number of moments may be detected. By monitoring those subsequent moments, the movement of the weft thread in the weft insertion direction and/or in a direction opposite to the weft insertion direction can be followed accurately.

In an exemplary embodiment, at least the second light emitter of the plurality of light emitters, and preferably each light emitter of the plurality of light emitters, comprises a lens part arranged to direct light to the first zone and the second zone. More preferably, each light emitter of the plurality of light emitters is configured to emit light in mainly two directions, one light beam directed to the left of a plane perpendicular to the weft insertion direction, and one light beam directed to the right of a plane perpendicular to the weft insertion direction, this plane being a plane through the respective light emitter. More preferably, at least 40% of the light emitted by the light emitter is directed to the left of the plane, and at least 40% of the light is emitted to the right of the plane. In that manner it is avoided that light is emitted to where it is not needed, in particular it is avoided that light is emitted along the plane through the light emitter, further enhancing the accuracy of the detection. The lens part of the light emitter may be made of a plastic material, for example a PMMA material.

According to an exemplary embodiment, at least the first light receiver comprises a lens part configured to bundle light. The lens part may be connected to a light guide such as a fiber. In that manner the collected light can be guided efficiently to an appropriate sensor having at least one sensing element. The lens part of the light receiver may be made of a plastic material, for example a PMMA material.

In an exemplary embodiment, at least the first light receiver comprises a lens part which is connected to a sensor, for example by a fiber to a pixel sensor. The pixel sensor may be a known pixel sensor, for example a pixel sensor with a plurality of sensing elements capable of offering a plurality of different detection signals at the same time.

In another embodiment, each light emitter of the plurality of light emitters comprises at least one LED. In an embodiment, each light emitter of the plurality of light emitters comprises a plurality of LEDs having different wavelengths, for example a number of LEDs corresponding to the number of different types of weft thread that are to be inserted. In that manner, the emitted light may be suitable for the detection of different types of weft thread. Preferably, at least one LED is connected to a number of light emitters of the plurality of light emitters.

In another embodiment, the first light emitter comprises a light emitting element emitting light in a first wavelength range, and the second light emitter comprises a light emitting element emitting light in a second wavelength range which is different from the first wavelength range. In that manner the light emitted to the first zone will comprise light in the first wavelength range and light in the second wavelength range. So, also in this embodiment, by providing different wavelength ranges, the sensor system may be suitable for the detection of different types of weft thread.

In exemplary embodiments of the invention, each light emitter of the plurality of light emitters may be configured to emit light in the visible spectrum or in the infrared spectrum. Those spectra provide good results for most types of weft thread.

According to an exemplary embodiment, the sensor system further comprises a guide channel for the weft thread. The guide channel extends in the weft insertion direction, and the first zone as well as any subsequent zones is located in the guide channel. For example, the guide channel may be formed at least partially by the dents of a reed.

In an exemplary embodiment, the first and the second light emitter are configured for emitting light in the first zone, wherein the first zone extends over at least 90% of the cross sectional area delimited by the walls of the guide channel, seen in a plane perpendicular to the weft insertion direction. To increase the first zone, the plurality of light emitters may interact with one or more mirrors.

According to another aspect of the invention, there is provided a weaving machine comprising a guide channel, a weft thread insertion device, and a sensor system according to any one of the embodiments described above. The guide channel is configured for guiding a weft thread. The weft thread insertion device is configured for inserting a weft thread in the guide channel in a weft insertion direction, in at least a first zone located in the guide channel. The sensor system is configured for sensing the weft thread in at least the first zone.

Preferably, the guide channel is formed, at least partially, by a plurality of dents of a reed. Preferably, the sensor system is provided on a common base arranged at a downstream end of the guide channel.

The weft thread insertion device may comprise at least one fluid nozzle, preferably at least one air nozzle. The at least one fluid nozzle is configured to insert the weft thread by means of a fluid flow.

In an exemplary embodiment, the weaving machine further comprises a control unit configured to control the weft thread insertion device in function of signals received by at least a first light receiver of the sensor system. This control unit may be integrated with the previously described controller, or may be provided separately.

In an exemplary embodiment, the controller is configured to determine a moment corresponding to the moment when the presence of a leading end of the weft thread is detected in at least the first zone, and preferably to determine the moments corresponding to the moments when the presence of a leading end of the weft thread is detected in any of the subsequent zones.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a cross section of an exemplary embodiment of a sensor system;
Figure 2 illustrates schematically a perspective view of an exemplary embodiment of a sensor system;
Figure 3 is a graph illustrating the collector efficiency in function of the position of an element to be detected by the embodiment of Fig. 2;
Figure 4 is a graph illustrating signals detected by subsequent light receivers, and the derived position of the weft thread in function of moments in the weaving cycle;
Figure 5 is a front view of the sensor system of the embodiment of figure 2;
Figure 6 is a cross section through the sensor system of the embodiment of figure 2;
Figure 7 is a graph illustrating the position of a leading end of a weft thread in function of time and zones;
Figure 8 is a perspective view illustrating a possible arrangement of the embodiment of figure 2;
Figure 9 is an alternative of the embodiment of figure 8;
Figure 10 is a schematic view of an exemplary embodiment of a weaving machine illustrating the data capitation and controlling steps.

### Description of embodiments

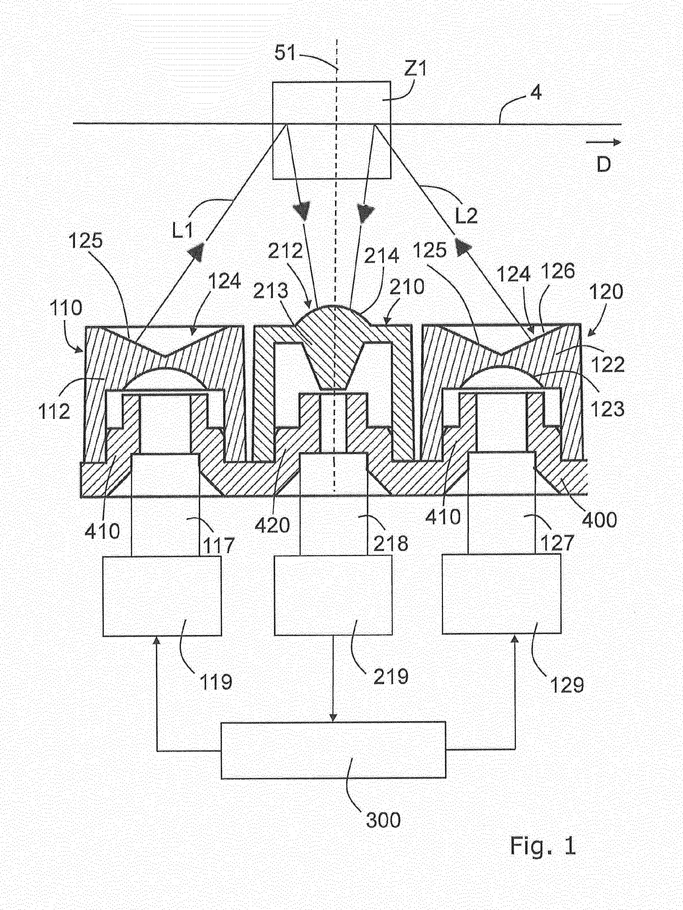

Figure 1 illustrates schematically a first exemplary embodiment of a sensor system for sensing a weft thread 4 that is being inserted in a weft insertion direction D, in at least a first zone Z1. The sensor system comprises a plurality of light emitters 110, 120 and at least one light receiver 210. In the most basic embodiment the plurality of light emitters comprises a first light emitter 110 and a second light emitter 120 configured for emitting light L1, L2 in the first zone Z1 where the weft thread 4 needs to be detected. The first light emitter 110 and the second light emitter 120 are located at a distance of each other, seen in the weft insertion direction D. The at least one light receiver comprises a first light receiver 210 configured for receiving light L1, L2 from the first and the second light emitter 110, 120 which has been reflected by the weft thread 4 in the first zone Z1. The first light receiver 210 is located, seen in the weft insertion direction D, between the first light emitter 110 and the second light emitter 120. Preferably the plurality of light emitters 110, 120 and the at least one light receiver 210 are arranged in a row and are integrated in an elongate module extending substantially parallel to the weft insertion direction D. In the illustrated embodiment the plurality of light emitters 110, 120 and the at least one light receiver 210 are arranged as separate building blocks on a common base 400.

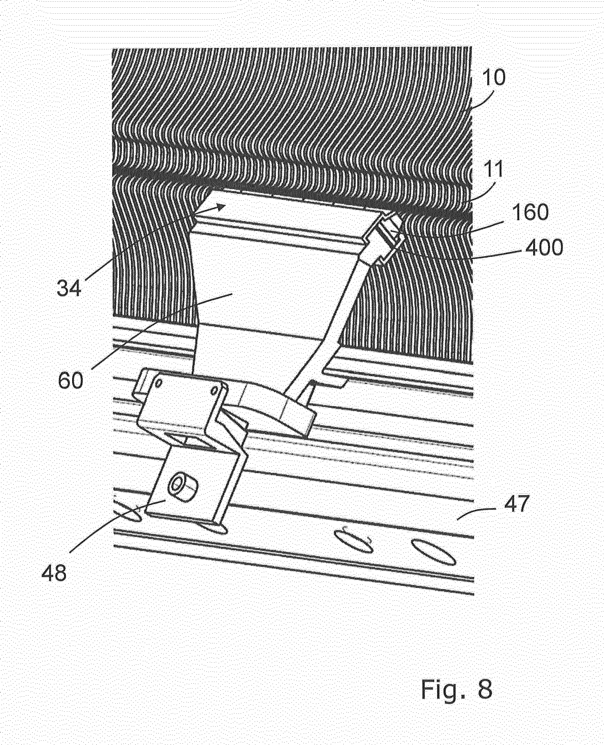

The first light receiver 210 is located opposite the first zone Z1, and the first and second light emitter 110, 120 are arranged symmetrical with respect to a plane 51 perpendicular to the weft insertion direction D through the first zone Z1. This will allow for an accurate detection of the weft thread 4 in the first zone Z1. The first zone Z1 will typically be located in a guide channel 11 of a reed 10, see figure 8, which will be discussed below. The first zone Z1 may extend over a substantial percentage of the cross-sectional area of the guide channel 11 such that the weft thread can be detected in any position of this cross-sectional area. Seen in the weft insertion direction D, the zone Z1 is preferably relatively short resulting in an accurate detection.

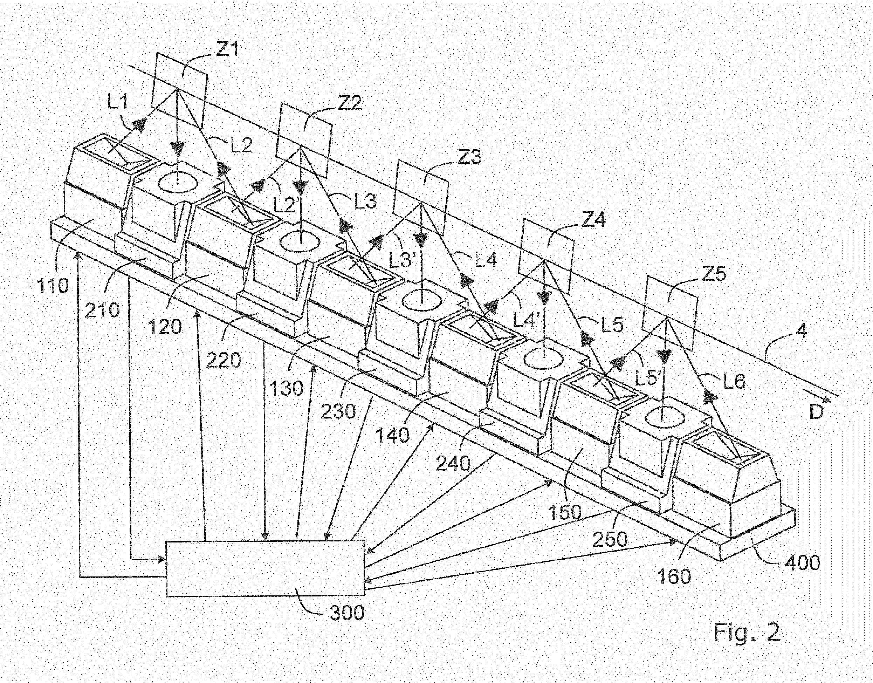

Figure 2 illustrates an embodiment of a sensor system for sensing the movement of a weft thread 4 that is being inserted in a weft insertion direction D, in a plurality of subsequent zones Z1, Z2, Z3, Z4, Z5 in the weft insertion direction D. The sensor system comprises a plurality of light emitters 110, 120, 130, 140, 150, 160 and a plurality of light receivers 210, 220, 230, 240, 250. A first light emitter 110 and a second light emitter 120 are configured for emitting light L1, L2 in a first zone Z1 where the weft thread needs to be detected. The second light emitter 120 and a third light emitter 130 are configured for emitting light L2', L3 in a second zone Z2 where the weft thread needs to be detected. The third light emitter 130 and a fourth light emitter 140 are configured for emitting light L3', L4 in a third zone Z3 where the weft thread needs to be detected. The fourth light emitter 140 and a fifth light emitter 150 are configured for emitting light L4', L5 in a fourth zone Z4 where the weft thread needs to be detected. The fifth light emitter 150 and a sixth light emitter 160 are configured for emitting light L5', L6 in a fifth zone Z5 where the weft thread needs to be detected. The subsequent zones Z1, Z2, Z3, Z4, Z5 are located downstream of each other, seen in the weft insertion direction D.

A first light receiver 210 is configured for receiving light L1, L2 from the first and the second light emitter 110, 120 which has been reflected by the weft thread 4 in the first zone Z1. A second light receiver 220 is configured for receiving light L2', L3 from the second and the third light emitter 120, 130 which has been reflected by the weft thread in the second zone Z2. A third light receiver 230 is configured for receiving light L3', L4 from the third and the fourth light emitter 130, 140 which has been reflected by the weft thread in the third zone Z3. A fourth light receiver 240 is configured for receiving light L4', L5 from the fourth and the fifth light emitter 140, 150 which has been reflected by the weft thread in the fourth zone Z4. A fifth light receiver 250 is configured for receiving light L5', L6 from the fifth and the sixth light emitter 150, 160 which has been reflected by the weft thread in the fifth zone Z5. Preferably, the length of each zone Z1, Z2, Z3, Z4, Z5 is smaller than 30 mm, more preferably smaller than 20 mm, and most preferably smaller than 15 mm.

In figure 3 the collector efficiency 71 is plotted in function of the position P of an element to be detected, seen in the insertion direction D, of a first light receiver 210. From this plot it can be seen that the length of zone Z1, in particular the zone Z1 where light is reflected towards the first light receiver 210, seen in the weft insertion direction D, is about 12 mm and that the collector efficiency is maximum in the middle of zone Z1. The value of the signal of the light received by the light receiver 210 is almost proportional to the collector efficiency. Preferably, the length of the first zone Z1 is smaller than 30 mm, more preferably smaller than 20 mm, and most preferably smaller than 15 mm. Similarly, the collector efficiency 72, 73, 74, 75 by each of the light receivers 220, 230, 240, 250 is plotted in function of the position of an element to be detected, seen in the insertion direction D. From this plot it can be seen that the respective collector efficiency 71, 72, 73, 74, 75 of the different the light receivers 210, 220, 230, 240, 250 results in narrow peaks at a distance from each other, seen in the weft insertion direction D, so that the position accuracy of the detection is high.

In figure 4 the signals 41, 42, 43, 44, 45 of the light receivers 210, 220, 230, 240, 250 are plotted in function of the position of the weft thread. From the plot is can be seen that each signal reaches a maximum in the middle of the respective zone Z1, Z2, Z3, Z4, Z5, seen in the weft insertion direction D, when the weft thread arrives opposite to the light receivers 210, 220, 230, 240, 250. When the weft thread passes to the light receivers 210, 220, 230, 240, 250, each signal remains at its maximum, as always another section of the weft thread is located opposite a corresponding detection zone Z1, Z2, Z3, Z4, Z5 and is reflected to a corresponding light receiver 210, 220, 230, 240, 250.

As illustrated in figures 1, 2, 5 and 6, the first light receiver 210 is located, seen in the weft insertion direction D, between the first light emitter 110 and the second light emitter 120. The second light receiver 220 is located, seen in the weft insertion direction D, between the second light emitter 120 and the third light emitter 130. The third light receiver 230 is located, seen in the weft insertion direction D, between the third light emitter 130 and the fourth light emitter 140. The fourth light receiver 240 is located, seen in the weft insertion direction D, between the fourth light emitter 140 and the fifth light emitter 150. The fifth light receiver 250 is located, seen in the weft insertion direction D, between the fifth light emitter 150 and the sixth light emitter 160. Preferably, the light emitters 110, 120, 130, 140, 150, 160 and the light receivers 210, 220, 230, 240, 250 are arranged in a row as a sequence light emitter-light receiver-light emitter-light receiver-light emitter- light receiver-light emitter-light receiver-light emitter. Preferably the light emitters 110, 120, 130, 140, 150, 160 and the light receivers 210, 220, 230, 240, 250 are integrated in an elongate module extending parallel to the weft insertion direction D. In the illustrated embodiment the plurality of light emitters 110, 120, 130, 140, 150, 160 and the light receivers 210, 220, 230, 240, 250 are arranged as separate building blocks on a common base 400. In that manner a compact and modular sensor system is obtained.

Each light receiver 210, 220, 230, 240, 250 is located opposite a corresponding detection zone Z1, Z2, Z3, Z4, Z5 and the respective adjacent light emitters 110, 120, 130, 140, 150, 160 are arranged symmetrical with respect to a plane 51, 52, 53, 54, 55 perpendicular to the weft insertion direction D and through the respective light receiver 210, 220, 230, 240, 250, and thus also through the respective zone Z1, Z2, Z3, Z4, Z5. Further, each light emitter 110, 120, 130, 140, 150, 160 is configured to emit light in mainly two directions, one light beam directed to the left of a plane 61, 62, 63, 64, 65, 66 perpendicular to the weft insertion direction D and one light beam directed to the right of the plane 61, 62, 63, 64, 65, 66 perpendicular to the weft insertion direction D. In an embodiment, the light emitter 110 only emits light in one direction towards the zone Z1 and the light emitter 160 only emits light in one direction towards the zone Z5.

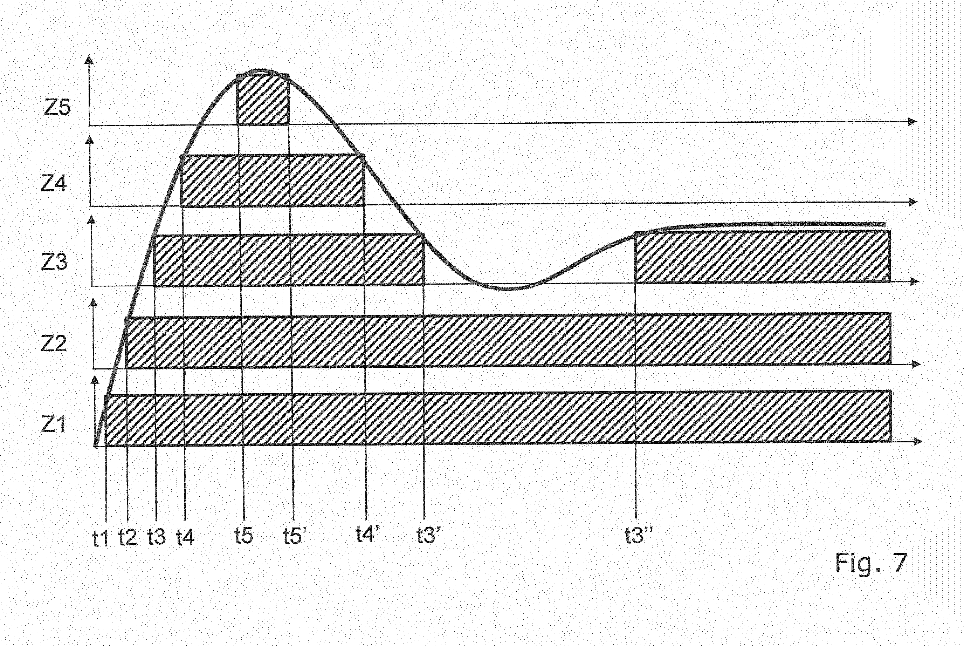

As illustrated in figures 1 and 2 the sensor system further comprises a controller 300 which is operatively connected to each light receiver 210, 220, 230, 240, 250. As illustrated in figure 7, the controller 300 is configured to determine a first moment t1 corresponding with the moment when the presence of a leading end of the weft thread is detected by the first light receiver 210 in the first zone Z1, a second moment t2 corresponding with the moment when the presence of a leading end of the weft thread is detected by the second light receiver 220 in the second zone Z2, a third moment t3 corresponding with the moment when the presence of a leading end of the weft thread is detected by the third light receiver 230 in the third zone Z3, a fourth moment t4 corresponding with the moment when the presence of a leading end of the weft thread is detected by the fourth light receiver 240 in the fourth zone Z4, and a fifth moment t5 corresponding with the moment when the presence of a leading end of the weft thread is detected by the fifth light receiver 250 in the fifth zone Z5.

Referring to figure 7, the first moment t1 may correspond with the moment for which the signal detected by first light receiver 210 reaches a value which is higher than a predetermined threshold value, which mainly corresponds with the moment at which the leading end of the weft thread reaches almost the middle of the first zone Z1. Similarly, the second moment t2 mainly corresponds with the moment for which the signal detected by second light receiver 220 reaches a value which value is higher than a predetermined threshold value, which may correspond with the moment at which the leading end of the weft thread reaches almost the middle of the second zone Z2. Similarly, moments t3, t4 and t5 can be determined for which a signal reaches a value corresponding with the moment at which the leading end of the weft thread reaches almost the middle of a respective zone Z3, Z4 and Z5.

In the example of figure 7 it is assumed that the end of the weft thread 4 first moves in the weft insertion direction D through zones Z1 to Z5, see moments t1, t2, t3, t4, t5, and then moves in a direction opposite to the weft insertion direction D from zone Z5 back to zone Z3, see moments t5', t4', t3', whereupon the end of the weft thread 4 moves again slightly in the weft insertion direction D to zone Z3, see moment t3". In this way it is possible to illustrate the way of stretching of the weft thread. Such an illustration has also the advantage that in case one of the light receivers should become out of function, the illustration will still allow to illustrate a way of stretching of the weft thread.

Using the exemplary embodiment of figure 2 it is possible to monitor the length of the inserted weft thread during the weaving process thanks to the arrangement of light emitters and light receivers that are arranged in a very limited available space, to detect in real time the actual position of the weft thread. The sensor system of figure 2 may be called a "way of stretching" sensor system and can accurately monitor the stretching process of a weft thread on a weaving machine, for example on an air-jet weaving machine. The sensor system can be used both with a so-called continuous reed, and with a so-called cut reed. The reed can be mounted on the weaving machine.

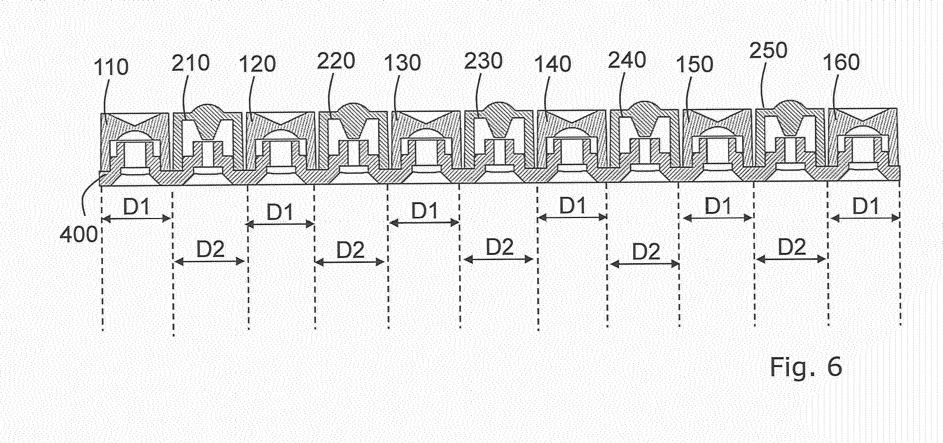

As illustrated in Figure 6, the length D1 of each light emitter 110, 120, 130, 140, 150, 160, seen in the weft insertion direction D, is smaller than 10 mm, more preferably smaller than 8 mm, most preferably between 3 and 7 mm. In a preferred embodiment the length D2 of each light receiver 210, 220, 230, 240, 250, seen in the weft insertion direction D, is smaller than 10 mm, more preferably smaller than 8 mm, most preferably between 3 and 7 mm. Preferably, the distance between the centre of a light receiver of the plurality of light receivers 210, 220, 230, 240, 250 and the centre of the subsequent adjacent light receiver is between 2 and 20 mm, more preferably between 4 and 16 mm, most preferably between 6 and 14 mm.

The exemplary embodiment of figure 2 may be mounted in order to detect the passage of a thread in a guide channel 11, located for example along a reed 10 of a weaving machine, see figure 8 which will be discussed below. This may be any reed 10, as there will be no significant impact of the vibration of the reed dents, in particular vibrations of the reed dents in the weft insertion direction D. Further it is possible to measure different types of weft thread, for example weft threads of a different colour and/or thickness.

In the exemplary embodiment of figure 2, each light receiver 210, 220, 230, 240, 250 can receive light from two light emitters, one on the left side and one on the right side of each light receiver 210, 220, 230, 240, 250, resulting in narrow peaks of the collector efficiency plot, see figure 3, and hence an accurate detection. Preferably, as illustrated in Figure 2, each light emitter 110, 120, 130, 140, 150, 160 emits light in mainly two directions, one light beam directed somewhat to the left and one light beam directed somewhat to the right, wherein substantially no light is directed perpendicular to the weft insertion direction D. Preferably, at least 40% of the light emitted by a light emitter is directed to the respective zone Z1, Z2, Z3, Z4, Z5 at the right hand side of a plane 61, 62, 63, 64, 65, 66 crossing the respective light emitter 110, 120, 130, 140, 150, 160, and perpendicular to the weft insertion direction D, and at least 40% of the light emitted by the light emitter is directed to the respective zone Z1, Z2, Z3, Z4, Z5 at a left hand side of the plane 61, 62, 63, 64, 65, 66.

In the exemplary embodiment six light emitters and five light receivers are provided. In an alternative depending on the length of the zone where a "way of stretching" needs to be measured, more or less light emitters and light receivers may be provided.

Each optical light receiver 210, 220, 230, 240, 250 may be coupled via respective optical fibres 218, as illustrated for the first light receiver 210 in figure 1, with a sensor 219, for example a pixel sensor. This pixel sensor 219 may be a known pixel sensor, for example a pixel sensor with a number of 128 sensing elements, which pixel sensor 219 is capable of offering a number of 128 different signals at the same time, depending on the illumination received by the number of 128 sensing elements. So, at different times a "measurement" is taken of the sensing elements that are illuminated, resulting in a measure for the collected illumination. From those measures taken by the light receivers 210, 220, 230, 240, 250 the way of stretching of the weft thread passing along the plurality of light receivers 210, 220, 230, 240, 250 can be accurately monitored. The detection, for example the taking of the "measurement" may be performed at regular intervals, with a period which is preferably smaller than 200 microseconds, more preferably smaller than 150 microseconds, and most preferably smaller than 120 microseconds. Such a pixel sensor is very compact and can be arranged easily on a sley of the weaving machine that moves to and fro to beat up weft threads and carries the reed 10. The optical fibres 218 allow for a convenient guiding of the light captured by the optical light receivers 210, 220, 230, 240, 250 towards the pixel sensor 219.

In exemplary embodiments of the invention measured signals are almost not influenced by reflections on a wall of the guide channel, in particular by reflections on the reed dents forming the guide channel. Since the reed dents vibrate in the weft insertion direction D during inserting of weft threads, this is advantageous for obtaining almost a constant basic reflection.

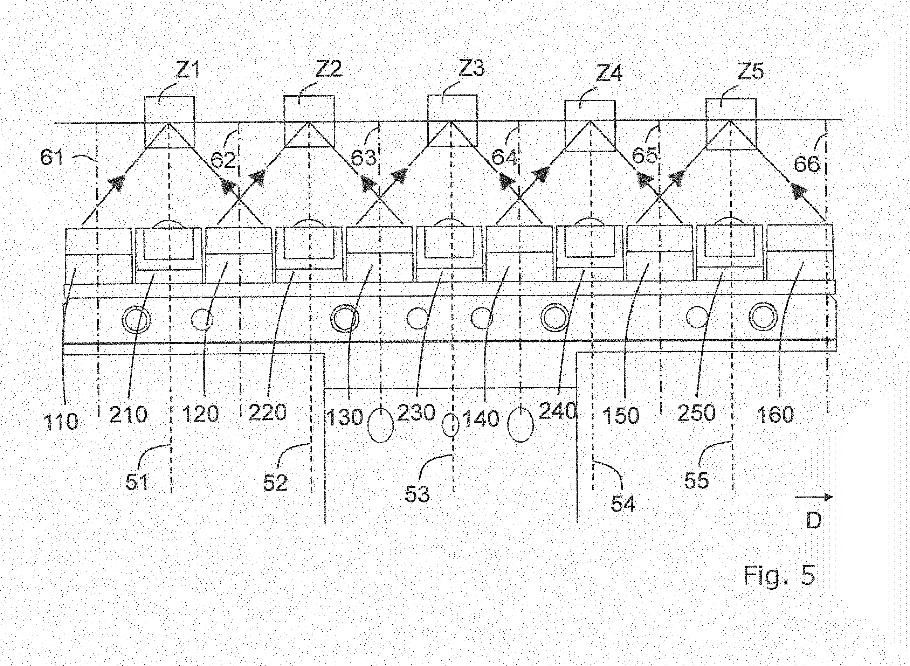

Figures 1 and 5 illustrate in detail a light emitter 110, 120 and a light receiver 210 for use in embodiments of the invention. The light emitter 110, 120 comprises a lens part 112, 122 with an at least partially concave bottom surface 123 and an upper surface 124 with a plurality of upper faces 125 and 126 arranged to direct light entering in the concave bottom surface 123 to a first zone and a second zone. Preferably, the upper faces 125 and 126 are arranged for creating two main light bundles, one to the left and one to the right of a plane perpendicular to the weft insertion direction D. Figure 2 illustrates a light emitter 120 emitting a first light beam L2 to the left and a second light beam L2' to the right. The light receiver 210 (see figures 1 and 5) comprises a lens part 212 with an at least partially convex upper surface 214 and a narrowing lower portion 213 configured to bundle light entering through the convex upper surface 214. The lens part 212 may be connected via a fibre 218 to a pixel sensor 219, as described above.

The plurality of light emitters and the one or more light receivers are provided on a common base 400. As illustrated in figure 1, the light emitters and the light receiver can be mounted as building blocks which can be removably fixed on the common base 400. As illustrated in figure 1, the common base 400 further comprises mounting protrusions 410 for mounting light emitters, and mounting protrusions 420 for mounting light receivers.

In preferred embodiments each light emitter of the plurality of light emitters 110, 120, 130, 140, 150, 160 comprises at least one LED. For example, the at least one LED 119, 129 may be connected through an optical fibre 117, 127 with the respective lens part 112, 122, see figure 1. Each light emitter of the plurality of light emitters 110, 120, 130, 140, 150, 160 may comprise a plurality of LEDs having different wavelengths. In that manner the light emitters 110, 120, 130, 140, 150, 160 may be made suitable to detect different types of weft thread. Alternatively, at least one LED 119, 129 may be connected, for example via a number of associated optical fibres, with a number of light emitters 110, 120, 130, 140, 150, 160.

In further developed embodiments, the first light emitter 110 comprises a light emitting element emitting light in a first wavelength range; and the second light emitter 120 comprises a light emitting element emitting light in a second wavelength range which is different from the first wavelength range. In that manner light of the first wavelength range and of the second wavelength range is emitted in the first zone, allowing the detection of a variety of different types of weft thread.

Preferably, each light emitter of the plurality of light emitters 110, 120, 130, 140, 150, 160 is configured to emit light in the visible spectrum or in the infrared spectrum. Those spectra are suitable for detecting different types of weft thread.

Figure 8 illustrates an arrangement of a sensor system according to the invention used as a thread monitor 34, which thread monitor 34 is able to determine when and how a weft thread passes at this thread monitor 34. The thread monitor 34 comprises a housing 60 in which the common base 400 is mounted. The housing 60 is fixed via a fixation element 48 to a sley 47 of the weaving machine onto which the reed 10 is mounted, in such a way that the sensor system can sense a weft thread moving along the sensor system in the guide channel 11 of the reed 10.

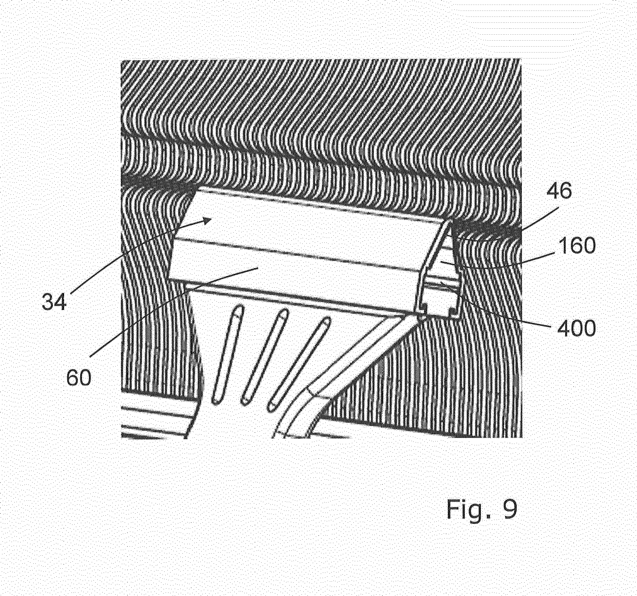

Figure 9 illustrates an alternative embodiment of Figure 8. The sensor system comprises a mirror 46 for reflecting the light of each light emitter and the reflected light by the weft thread. Such a mirror 46 allows to improve the percentage of the cross-sectional area delimited by the guide channel 11 over which the zones Z1 to Z5 extend. Using a mirror 46, can easily result in that the first zone Z1 extends over at least 90% of the surface area of the guide channel 11, seen in a plane perpendicular to the weft insertion direction D.

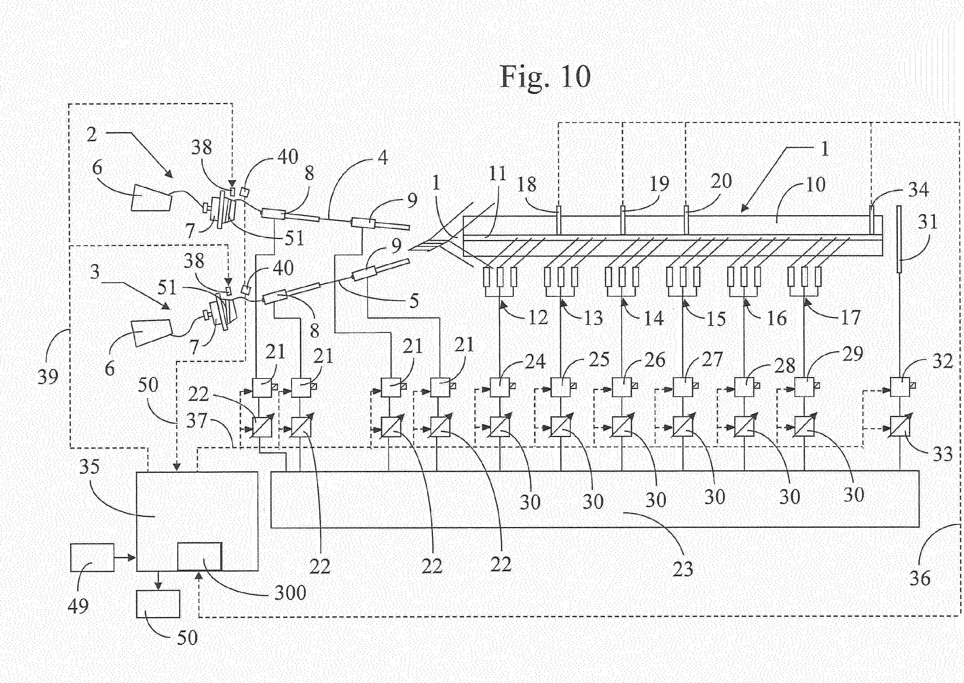

Figure 10 shows a device for transporting a weft thread 4, 5 through a diagrammatically indicated shed 1 of an air-jet weaving machine. This device has two supply channels 2, 3 for the supply of weft threads 4, 5. Each supply channel 2, 3 has a thread supply 6, a prewinder 7, a first main nozzle 8 and a second main nozzle 9. Furthermore, the air-jet weaving machine has a reed 10 in which a guide channel 11 is provided which allows a weft thread 4, 5 to be transported through the shed 1 via this guide channel 11 with the aid of compressed air. Near this guide channel 11, successive sets of auxiliary nozzles 12, 13, 14, 15, 16 and 17 may be arranged in order to successively support a weft thread 4, 5 using compressed air. In addition, a plurality of thread monitors 18, 19 and 20 may be arranged along the guide channel 11 in order to detect when a weft thread 4, 5 arrives at these thread monitors 18, 19 and 20, more particularly when the leading end of the weft thread 4, 5 arrives at these thread monitors 18, 19 or 20. The thread monitors 18, 19 and 20 are arranged in the longitudinal direction of the guide channel 11 and at a certain distance after a set of auxiliary nozzles 12, 13 and 14. A further thread monitor may be provided at the entrance of the reed 10. One or more of the thread monitors 18, 19, 20 may be implemented with an exemplary embodiment of a sensor system as described above, for example with the embodiment illustrated in figure 1, provided that no warp threads are present in the vicinity of the thread monitors 18, 19, 20 where the monitoring is performed.

The main nozzles 8 and 9 are connected to a compressed-air source 23 via associated shut-off valves 21 and associated throttle valves 22. Each set of auxiliary nozzles 12, 13, 14, 15, 16 and 17 is analogously connected via a shut-off valve 24, 25, 26, 27, 28 and 29 and an associated throttle valve 30 to the compressed-air source 23. According to a variant (not shown), a separate compressed-air source 23 may be provided for both the main nozzles and the auxiliary nozzles. In addition, a stretching nozzle 31 is shown which serves to keep a weft thread stretched once it has been inserted. The stretching nozzle 31 is connected to a compressed-air source 23 via a shut-off valve 32 and a throttle valve 33. At the end of the guide channel 11 which is situated opposite the end where the main nozzles 9 are arranged, a thread monitor 34 is arranged which is able to determine when and how a weft thread 4, 5 passes at this thread monitor 34. Thread monitor 34 may be implemented with an exemplary embodiment of a way of stretching sensor system as described above, for example the embodiment illustrated in figure 2. The arrangement of a thread monitor 34 shaped as a sensor system according to the invention is illustrated in detail in figure 8.

The shut-off valves 21, 24, 25, 26, 27, 28, 29, 32 and the throttle valves 22, 30, 33 are controlled by a control unit 35 of the air-jet weaving machine. The thread monitors 18, 19, 20 and 34 may also communicate with the control unit 35. Control unit 35 and previously described controller 300 may be integrated as a single unit. The shut-off valves may be designed as electromagnetic valves which can be controlled by the control unit 35. The throttle valves 22, 30, 33 may also be designed such that they can be driven by a motor and can be controlled by the control unit 35.

A weft thread 4, 5 is blown into the guide channel 11 by the main nozzles 8, 9 and is then blown further along the guide channel 11 by jets of air from the auxiliary nozzles 12, 13, 14, 15, 16 and 17. The guide channel 11 is, for example, arranged in a reed 10 and is disposed in a known way in a shed 1 during the insertion of a weft thread 4, 5. The main nozzle 9, the auxiliary nozzles 12, 13, 14, 15, 16 and 17, the reed 10 and the thread monitors 18, 19, 20 and 34 may be mounted in a known way on a sley 47 moving in a reciprocating fashion. The thread supply 6, the prewinders 7, the main nozzle 8 and the stretching nozzle 31 may be mounted in a known way on a frame of the air-jet weaving machine.

Each prewinder 7 may contain a magnetic pin 38 in order to release a desired length of weft thread 4 or 5 at a suitable moment in the weaving cycle. The magnetic pins 38 may be connected to the control unit 35 via a common connecting line 39. Each prewinder 7 may also comprise a winding detector 40 for detecting when a winding is drawn from the prewinder 7.

With air-jet weaving machines, it is customary to weave at a weaving speed in the order of magnitude of 800 to 1800 weft threads per minute or, expressed differently, of 1400 to 4200 meters/minute. In this case, an insertion of a weft thread only takes a few tens of milliseconds. When weaving irregular weft threads, for example spun weft threads, it is possible that, with successive weft threads, a measured insertion parameter differs strongly from weft thread to weft thread. In this case, it is possible that a certain weft thread arrives at a thread monitor 18, 19, 20 or 34 at a different moment in the weaving cycle.

Measurements are carried out on the transported weft thread 4, 5 while the weft thread 4, 5 is being transported. In the illustrated example, these measurements comprise measuring the moment when a weft thread 4, 5 respectively arrives at a thread monitor 18, 19, 20, 34. The moment when the supply of compressed air to a set of auxiliary nozzles 14, 15 or 16 is started or is interrupted, may be determined based on such measurements on the transported weft thread 4, 5.

The weaving machine also comprises an input unit 49, for example a touch screen unit, to input parameters and/or to define process flows, wherein the parameters input and/or the defined process flows may be used by control unit 35 to perform the controlling various components connected to the control unit 35. If the input unit 49 does not comprise a display unit, a separate display unit 50 may be provided to inform the user about the measurements performed by the thread monitors 18, 19, 20, 34. In an embodiment of the invention, the display unit 50 can display the drawing of Figure 7, so that an operator can interpret the way a stretching of a weft thread. Of course, the control unit 35 can also analyse the data received by the thread monitors 18, 19, 20, 34 in a statistical way, and propose setting for the nozzles in order to reduce the waste of weft thread. In a preferred embodiment, based on the signals of the thread monitor 34, an operator or the control unit 35 can easily set the setting for the nozzles in order to obtain an optimal waste length of the inserted weft threads. To this end, at least the thread monitor 34 is designed as a sensing system according to the invention. Designing the thread monitor 34 as a sensor system according the invention is preferable to use the thread monitor 34 as a way of stretching sensor.

More details about an air-jet weaving machine can be found in European patent EP 1 951 941 B1 in the name of the Applicant, which is included herein by reference.

It is clear that the invention is not limited to an air-jet weaving machine in which a weft thread is blown into a guide channel 11 by means of compressed air. The weaving machine may also be a rapier weaving machine, or any another type of weaving machine where a weft thread can be sensed by means of a sensing system according to the invention. Further, the sets of auxiliary nozzles of the air-jet weaving machine can also blow onto a holder for a weft thread which transports a weft thread through the shed. In addition, instead of standard compressed air, any desired fluid can be used for inserting a weft thread in a shed of a weaving machine of this type. In this case, it is also possible to use standard compressed air mixed with a gas, a liquid or a vapor.

Figure 10 illustrates schematically the operation of a weaving machine according to an exemplary embodiment of the invention. A thread supply 6 and a prewinder 7 supply a weft thread to the main nozzles 8, 9 which cause the weft thread to be blown into a guide channel 11. Auxiliary nozzles 12 to 17 may be arranged in order to successively support the weft thread in the guide channel 11. The weft thread moves through the guide channel 11, and at the end of the guide channel 11 a weft thread monitor 34 designed as a sensor system according to any one of the embodiments described above is provided. A controller 300 receives data from the plurality of light receivers of the sensor system and determines the position of the weft thread in function of several moments in the weaving cycle when the weft thread passes the zones Z1 to Z5 of the sensor system, in particular passes the thread monitor 34 that is designed as sensor system according to the invention. Using this data, a measure for the way of stretching and/or the length of the inserted weft thread may be obtained. The controller 300 cooperates with the control unit 35 which is configured to control the prewinders 7, and/or the main nozzles 8, 9, and/or the auxiliary nozzles 12 to 17 in function of the determined way of stretching and/or the length of the inserted weft thread.

It is clear, that the present description mentions moment, this moment can be expressed in crank degrees of the weaving machine or in time units, for example time units starting from the beat-up of the weaving machine. In this case, one crank degree of the weaving machine corresponds, for example, to a number of milliseconds or one millisecond corresponds to a number of crank degrees.

The steps of various above-described methods can be performed by programmed computers. Herein, some embodiments are also intended to cover program storage devices, for example, digital data storage media, which are machine or computer readable and encode machine-executable or computer-executable programs of instructions, wherein these instructions perform some or all of the steps of the above-described methods. The program storage devices may be, for example digital memories, magnetic storage media such as a magnetic disks and magnetic tapes, hard drives, or optically readable digital data storage media. The embodiments are also intended to cover computers programmed to perform the steps of the above-described methods.

For example, there is provided a computer program comprising computer-executable instructions to perform the method, when the program is run on a computer, according to any one of the steps of any one of the embodiments disclosed above. Further, there is provided a computer device or other hardware device programmed to perform one or more steps of any one of the embodiments of the method disclosed above. Further, there is provided a data storage device encoding a program in machine-readable and machine-executable form to perform one or more steps of any one of the embodiments of the method disclosed above.

The functions of the various elements shown in the figures, including any functional blocks labelled as "controller" or "control unit", may be provided through the use of dedicated hardware as well as hardware capable of executing software in association with appropriate software. When provided by a controller or control unit, the functions may be provided by a single dedicated controller, by a single shared controller, or by a plurality of individual controllers, some of which may be shared.

Whilst the principles of the invention have been set out above in connection with specific embodiments, it is to be understood that this description is merely made by way of example and not as a limitation of the scope of protection which is determined by the appended claims.

## Claims

1. Sensor system for sensing a weft thread (4, 5) that is being inserted in the weft insertion direction (D), in at least a first zone (Z1); the sensor system comprising:
a plurality of light emitters comprising at least a first and a second light emitter (110, 120) configured for emitting light (L1, L2) in the first zone (Z1) where the weft thread (4, 5) needs to be detected; wherein the first light emitter (110) and the second light emitter (120) are located at a distance from each other, seen in the weft insertion direction (D);
one or more light receivers comprising a first light receiver (210) configured for receiving light from the first and the second light emitter (110, 120) which has been reflected by the weft thread in the first zone (Z1);
wherein the first light receiver (210) is located, seen in the weft insertion direction (D), between the first light emitter (110) and the second light emitter (120);
**characterized in that** the second light emitter (120) is further configured for emitting light in a second zone (Z2) where the weft thread needs to be detected, the second zone (Z2) is located downstream of the first zone (Z1), seen in the weft insertion direction (D);
wherein the plurality of light emitters comprises a third light emitter (130) configured for emitting light in the second zone (Z2); wherein the second light emitter (120) and the third light emitter (130) are located at a distance from each other, seen in the weft insertion direction (D);
wherein the one or more light receivers comprise a second light receiver (220) configured for receiving light from the second and the third light emitter (120, 130) which has been reflected by the weft thread in the second zone (Z2);
wherein the second light receiver (220) is located, seen in the weft insertion direction (D), between the second light emitter (120) and the third light emitter (130).

2. Sensor system according to claim 1, wherein the first light receiver (210) is located opposite the first zone (Z1), and the first and the second light emitter (110, 120) are arranged substantially symmetrical with respect to a plane (51) perpendicular to the weft insertion direction (D) through the first zone (Z1).

3. Sensor system according to claim 1 or 2, wherein the second light receiver (220) is located opposite the second zone (Z2), and the second light emitter (120) and the third light emitter (130) are arranged symmetrical with respect to a plane (52) perpendicular to the weft insertion direction (D) through the second zone (Z2).

4. Sensor system according to any one of the claims 1 to 3, wherein
the one or more light receivers comprise at least two, preferably at least three light receivers (110, 120, 130, 140, 150, 160);
the plurality of light emitters comprise at least three, preferably at least four light emitters (210, 220, 230, 240, 250);
wherein each light receiver of the one or more light receivers (110, 120, 130, 140, 150, 160) is positioned between two light emitters of the plurality of light emitters (210, 220, 230, 240, 250), seen in the weft insertion direction (D).

5. Sensor system according to any one of the claims 1 to 4, further comprising a controller (300), wherein the controller (300) is operatively connected to the first light receiver (210) and the second light receiver (220), and wherein the controller (300) is configured to determine a first moment corresponding to the moment when the presence of a leading end of the weft thread is detected by the first light receiver (210) in the first zone (Z1), and a second moment corresponding to the moment when the presence of a leading end of the weft thread is detected by the second light receiver (220) in the second zone (Z2).

6. Sensor system according to any one of the claims 1 to 5, wherein at least the second light emitter (120) of the plurality of light emitters (110, 120, 130, 140, 150, 160) comprises a lens part (122) arranged to direct light to the first zone (Z1) and the second zone (Z2).

7. Sensor system according to any one of the claims 1 to 6, wherein each light emitter of the plurality of light emitters (110, 120, 130, 140, 150, 160) is configured to emit light in mainly two directions, one light beam directed to the left of a plane (61, 62, 63, 64, 65, 66) perpendicular to the weft insertion direction (D), and one light beam directed to the right of the plane (61, 62, 63, 64, 65, 66) perpendicular to the weft insertion direction (D).

8. Sensor system according to any one of the claims 1 to 7, wherein at least the first light receiver (210) comprises a lens part (212) configured to bundle received light and connected to a sensor (219).

9. Sensor system according to any one of the claims 1 to 8, wherein at least one LED is connected to a number of light emitters (110, 120, 130, 140, 150, 160) of the plurality of light emitters (110, 120, 130, 140, 150, 160).

10. Sensor system according to any one of the claims 1 to 9, wherein each light emitter of the plurality of light emitters (110, 120, 130, 140, 150, 160) comprises a plurality of LEDs having different wavelengths.

11. Sensor system according to any one of the claims 1 to 10, wherein the first light emitter (110) comprises a light emitting element emitting light in a first wavelength range; and wherein the second light emitter (120) comprises a light emitting element emitting light in a second wavelength range which is different from the first wavelength range.

12. Weaving machine comprising:
a guide channel (11) configured for guiding a weft thread (4, 5);
a weft thread insertion device configured for inserting a weft thread (4, 5) in the guide channel (11) in a weft insertion direction (D), in at least a first zone (Z1) and a second zone (Z2) located in the guide channel (11); and
a sensor system according to any one of the claims 1 to 11, configured for sensing a weft thread (4, 5) in at least the first zone (Z1) and the second zone (Z2).

13. Weaving machine according to the claim 12, wherein the sensor system is provided on a common base (400) arranged at a downstream end of the guide channel (11).

14. Weaving machine according to the claim 12 or 13, wherein the guide channel (11) is formed, at least partially, by a plurality of dents of a reed (10).

15. Weaving machine according to any one of the claims 12 to 14, further comprising a controller (300) configured to determine a moment corresponding to the moment when the presence of a leading end of the weft thread is detected in at least the first zone (Z1) and the second zone (Z2).

## Patentansprüche

1. Sensorsystem zur Erfassung eines in der Schusseintragsrichtung (D) eingetragenen Schussfadens (4, 5), in mindestens einer ersten Zone (Z1); das Sensorsystem umfassend:
eine Vielzahl von Lichtemittern umfassend mindestens einen ersten und einen zweiten Lichtemitter (110, 120), die dazu ausgebildet sind, Licht (L1, L2) in der ersten Zone (Z1) zu emittieren wo der Schussfaden (4, 5) erfasst werden muss; wobei der erste Lichtemitter (110) und der zweite Lichtemitter (120) sich in einem Abstand zueinander befinden, gesehen in der Schusseintragsrichtung (D);
einen oder mehrere Lichtempfänger umfassend einen ersten Lichtempfänger (210), der dazu ausgebildet ist, Licht von dem ersten und dem zweiten Lichtemitter (110, 120) zu empfangen, das von dem Schussfaden in der ersten Zone (Z1) reflektiert wurde;
wobei der erste Lichtempfänger (210) sich zwischen dem ersten Lichtemitter (110) und dem zweiten Lichtemitter (120) befindet, gesehen in der Schusseintragsrichtung (D);
**dadurch gekennzeichnet, dass** der zweite Lichtemitter (120) weiter dazu ausgebildet ist, Licht in einer zweiten Zone (Z2) zu emittieren wo der Schussfaden erfasst werden muss, die zweite Zone (Z2) sich stromabwärts der ersten Zone (Z1) befindet, gesehen in der Schusseintragsrichtung (D); wobei die Vielzahl von Lichtemittern einen dritten Lichtemitter (130) umfasst, der dazu ausgebildet ist, Licht in der zweiten Zone (Z2) zu emittieren; wobei der zweite Lichtemitter (120) und der dritte Lichtemitter (130) sich in einem Abstand zueinander befinden, gesehen in der Schusseintragsrichtung (D);
wobei der eine oder die mehreren Lichtempfänger einen zweiten Lichtempfänger (220) umfassen, der dazu ausgebildet ist, Licht von dem zweiten und dem dritten Lichtemitter (120, 130) zu empfangen, das von dem Schussfaden in der zweiten Zone (Z2) reflektiert wurde;
wobei der zweite Lichtempfänger (220) sich zwischen dem zweiten Lichtemitter (120) und dem dritten Lichtemitter (130) befindet, gesehen in der Schusseintragsrichtung (D).

2. Sensorsystem nach Anspruch 1, wobei der erste Lichtempfänger (210) sich gegenüber der ersten Zone (Z1) befindet, und der erste und der zweite Lichtemitter (110, 120) im Wesentlichen symmetrisch zu einer Ebene (51) senkrecht zur Schusseintragsrichtung (D) durch die erste Zone (Z1) angeordnet sind.

3. Sensorsystem nach Anspruch 1 oder 2, wobei der zweite Lichtempfänger (220) sich gegenüber der zweiten Zone (Z2) befindet, und der zweite Lichtemitter (120) und der dritte Lichtemitter (130) symmetrisch zu einer Ebene (52) senkrecht zur Schusseintragsrichtung (D) durch die zweite Zone (Z2) angeordnet sind.

4. Sensorsystem nach einem der Ansprüche 1 bis 3, wobei
der eine oder mehrere Lichtempfänger mindestens zwei, vorzugsweise mindestens drei Lichtempfänger (110, 120, 130, 140, 150, 160) umfassen;
die Vielzahl von Lichtemittern mindestens drei, vorzugsweise mindestens vier Lichtemitter (210, 220, 230, 240, 250) umfasst;
wobei jeder Lichtempfänger des einen oder der mehreren Lichtempfänger (110, 120, 130, 140, 150, 160) zwischen zwei Lichtemittern der Vielzahl von Lichtemittern (210, 220, 230, 240, 250) positioniert ist, gesehen in der Schusseintragsrichtung (D).

5. Sensorsystem nach einem der Ansprüche 1 bis 4, weiter umfassend eine Steuerung (300), wobei die Steuerung (300) wirksam mit dem ersten Lichtempfänger (210) und dem zweiten Lichtempfänger (220) verbunden ist, und wobei die Steuerung (300) dazu ausgebildet ist, ein dem Moment entsprechendes erstes Moment zu bestimmen, wenn das Vorhandensein eines vorderen Endes des Schussfadens durch den ersten Lichtempfänger (210) in der ersten Zone (Z1) erfasst wird, und ein dem Moment entsprechendes zweites Moment zu bestimmen, wenn das Vorhandensein eines vorderen Endes des Schussfadens durch den zweiten Lichtempfänger (220) in der zweiten Zone (Z2) erfasst wird.

6. Sensorsystem nach einem der Ansprüche 1 bis 5, wobei mindestens der zweite Lichtemitter (120) der Vielzahl von Lichtemittern (110, 120, 130, 140, 150,160) ein Linsenteil (122) umfasst, das angeordnet ist, um Licht zu der ersten Zone (Z1) und der zweiten Zone (Z2) zu richten.

7. Sensorsystem nach einem der Ansprüche 1 bis 6, wobei jeder Lichtemitter der Vielzahl von Lichtemittern (110, 120, 130, 140, 150, 160) dazu ausgebildet ist, Licht in hauptsächlich zwei Richtungen zu emittieren, wobei ein Lichtstrahl links von einer Ebene (61, 62, 63, 64, 65, 66) senkrecht zur Schusseintragsrichtung (D) gerichtet ist, und ein Lichtstrahl, rechts von der Ebene (61, 62, 63, 64, 65, 66) senkrecht zur Schusseintragsrichtung (D) gerichtet ist.

8. Sensorsystem nach einem der Ansprüche 1 bis 7, wobei mindestens der erste Lichtempfänger (210) ein Linsenteil (212) umfasst, das dazu ausgebildet ist, empfangenes Licht zu bündeln und mit einem Sensor (219) verbunden ist.

9. Sensorsystem nach einem der Ansprüche 1 bis 8, wobei mindestens eine LED mit einer Anzahl von Lichtemittern (110, 120, 130, 140, 150, 160) der Vielzahl von Lichtemittern (110, 120, 130, 140, 150, 160) verbunden ist.

10. Sensorsystem nach einem der Ansprüche 1 bis 9, wobei jeder Lichtemitter der Vielzahl von Lichtemittern (110, 120, 130, 140, 150, 160) eine Vielzahl von LEDs mit unterschiedlichen Wellenlängen umfasst.

11. Sensorsystem nach einem der Ansprüche 1 bis 10, wobei der erste Lichtemitter (110) ein lichtemittierendes Element umfasst, das Licht in einem ersten Wellenlängenbereich emittiert; und wobei der zweite Lichtemitter (120) ein lichtemittierendes Element umfasst, das Licht in einem zweiten Wellenlängenbereich, der von dem ersten Wellenlängenbereich verschieden ist, emittiert.

12. Webmaschine umfassend:
einen Führungskanal (11), der dazu ausgebildet ist, einen Schussfaden (4, 5) zu führen;
eine Schussfadeneintragsvorrichtung, die dazu ausgebildet ist, einen Schussfaden (4, 5) im Führungskanal (11) in einer Schusseintragsrichtung (D) zu führen, in mindestens einer ersten Zone (Z1) und einer zweiten Zone (Z2) die sich im Führungskanal (11) befinden; und
ein Sensorsystem nach einem der Ansprüche 1 bis 11, das dazu ausgebildet ist, einen Schussfaden (4, 5) in mindestens der ersten Zone (Z1) und der zweiten Zone (Z2) zu erfassen.

13. Webmaschine nach Anspruch 12, wobei das Sensorsystem auf einer gemeinsamen Basis (400), die an einem stromabwärtigen Ende des Führungskanals (11) angeordnet ist, vorgesehen ist.

14. Webmaschine nach Anspruch 12 oder 13, wobei der Führungskanal (11), mindestens teilweise, durch eine Vielzahl von Zähnen eines Webblattes (10) gebildet ist.

15. Webmaschine nach einem der Ansprüche 12 bis 14, weiter umfassend eine Steuerung (300), die dazu ausgebildet ist, ein dem Moment entsprechendes Moment zu bestimmen, wenn das Vorhandensein eines vorderen Endes des Schussfadens in mindestens der ersten Zone (Z1) und der zweiten Zone (Z2) erfasst wird.

## Revendications

1. Système de détection pour détecter un fil de trame (4, 5) qui est inséré dans la direction d'insertion de trame (D), dans au moins une première zone (Z1); le système de détection comprenant:
une pluralité d'émetteurs de lumière comprenant au moins un premier et un deuxième émetteur de lumière (110, 120) configuré pour émettre de la lumière (L1, L2) dans la première zone (Z1) où le fil de trame (4, 5) doit être détecté; dans lequel le premier émetteur de lumière (110) et le deuxième émetteur de lumière (120) sont situés à une distance l'un de l'autre, vus dans la direction d'insertion de trame (D);
un ou plusieurs récepteurs de lumière comprenant un premier récepteur de lumière (210) configuré pour recevoir la lumière provenant du premier et du deuxième émetteur de lumière (110, 120) qui a été réfléchie par le fil de trame dans la première zone (Z1);
dans lequel le premier récepteur de lumière (210) est situé, vu dans la direction d'insertion de trame (D), entre le premier émetteur de lumière (110) et le deuxième émetteur de lumière (120); **caractérisé en ce que** le deuxième émetteur de lumière (120) est en outre configuré pour émettre de la lumière dans une deuxième zone (Z2) où le fil de trame doit être détecté, la deuxième zone (Z2) est située en aval de la première zone (Z1), vue dans la direction d'insertion de trame (D);
dans lequel la pluralité d'émetteurs de lumière comprend un troisième émetteur de lumière (130) configuré pour émettre de la lumière dans la deuxième zone (Z2); dans lequel le deuxième émetteur de lumière (120) et le troisième émetteur de lumière (130) sont situés à une distance l'un de l'autre, vus dans la direction d'insertion de trame (D);
dans lequel l'un ou plusieurs récepteurs de lumière comprennent un deuxième récepteur de lumière (220) configuré pour recevoir la lumière provenant du deuxième et du troisième émetteur de lumière (120, 130) qui a été réfléchie par le fil de trame dans la deuxième zone (Z2);
dans lequel le deuxième récepteur de lumière (220) est situé, vu dans la direction d'insertion de trame (D), entre le deuxième récepteur de lumière (120) et le troisième émetteur de lumière (130).

2. Système de détection selon la revendication 1, dans lequel le premier récepteur de lumière (210) est situé à l'opposé de la première zone (Z1), et le premier et le deuxième émetteur de lumière (110, 120) sont disposés de manière sensiblement symétrique par rapport à un plan (51) perpendiculaire à la direction d'insertion de trame (D) à travers la première zone (Z1).

3. Système de détection selon la revendication 1 ou 2, dans lequel le deuxième récepteur de lumière (220) est situé à l'opposé de la deuxième zone (Z2), et le deuxième émetteur de lumière (120) et le troisième émetteur de lumière (130) sont disposés de manière symétrique par rapport à un plan (52) perpendiculaire à la direction d'insertion de trame (D) à travers la deuxième zone (Z2).

4. Système de détection selon l'une quelconque des revendications 1 à 3, dans lequel
l'un ou plusieurs récepteurs de lumière comprennent au moins deux, de préférence au moins trois récepteurs de lumière (110, 120, 130, 140, 150, 160);
la pluralité d'émetteurs de lumière comprend au moins trois, de préférence au moins quatre émetteurs de lumière (210, 220, 230, 240, 250);
dans lequel chaque récepteur de lumière du ou des récepteurs de lumière (110, 120, 130, 140, 150, 160) est positionné entre deux émetteurs de lumière de la pluralité d'émetteurs de lumière (210, 220, 230, 240, 250), vu dans la direction d'insertion de trame (D).

5. Système de détection selon l'une quelconque des revendications 1 à 4, comprenant en outre un dispositif de commande (300), dans lequel le dispositif de commande (300) est connecté fonctionnellement au premier récepteur de lumière (210) et au deuxième récepteur de lumière (220), et dans lequel le dispositif de commande (300) est configuré pour déterminer un premier moment correspondant au moment où la présence d'une extrémité avant du fil de trame est détectée par le premier récepteur de lumière (210) dans la première zone (Z1), et un deuxième moment correspondant au moment où la présence d'une extrémité avant du fil de trame est détectée par le deuxième récepteur de lumière (220) dans la deuxième zone (Z2).

6. Système de détection selon l'une quelconque des revendications 1 à 5, dans lequel au moins le deuxième émetteur de lumière (120) de la pluralité d'émetteurs de lumière (110, 120, 130, 140, 150, 160) comprend une partie lentille (122) disposée pour diriger la lumière vers la première zone (Z1) et la deuxième zone (Z2).

7. Système de détection selon l'une quelconque des revendications 1 à 6, dans lequel chaque émetteur de lumière de la pluralité d'émetteurs de lumière (110, 120, 130, 140, 150, 160) est configuré pour émettre de la lumière dans principalement deux directions, un faisceau lumineux dirigé vers la gauche d'un plan (61, 62, 63, 64, 65, 66) perpendiculaire à la direction d'insertion de trame (D), et un faisceau lumineux dirigé vers la droite du plan (61, 62, 63, 64, 65, 66) perpendiculaire à la direction d'insertion de trame (D).

8. Système de détection selon l'une quelconque des revendications 1 à 7, dans lequel au moins le premier récepteur de lumière (210) comprend une partie lentille (212) configurée pour regrouper la lumière reçue et connectée à un détecteur (219).

9. Système de détection selon l'une quelconque des revendications 1 à 8, dans lequel au moins une LED est connectée à un nombre d'émetteurs de lumière (110, 120, 130, 140, 150, 160) de la pluralité d'émetteurs de lumière (110, 120, 130, 140, 150, 160).

10. Système de détection selon l'une quelconque des revendications 1 à 9, dans lequel chaque émetteur de lumière de la pluralité d'émetteurs de lumière (110, 120, 130, 140, 150, 160) comprend une pluralité de LED ayant différentes longueurs d'onde.

11. Système de détection selon l'une quelconque des revendications 1 à 10, dans lequel le premier émetteur de lumière (110) comprend un élément émetteur de lumière émettant de la lumière dans une première plage de longueur d'onde; et dans lequel le deuxième émetteur de lumière (120) comprend un élément émetteur de lumière émettant de la lumière dans une deuxième plage de longueurs d'onde qui est différente de la première plage de longueurs d'onde.

12. Machine à tisser comprenant:
un canal de guidage (11) configuré pour guider un fil de trame (4, 5);
un dispositif d'insertion de fil de trame configuré pour insérer un fil de trame (4, 5) dans le canal de guidage (11) dans une direction d'insertion de trame (D), dans au moins une première zone (Z1) et une deuxième zone (Z2) situées dans le canal de guidage (11); et
un système de détection selon l'une quelconque des revendications 1 à 11, configuré pour détecter un fil de trame (4, 5) dans au moins la première zone (Z1) et la deuxième zone (Z2).

13. Machine à tisser selon la revendication 12, dans lequel le système de détection est prévu sur une base commune (400) disposée à une extrémité aval du canal de guidage (11).

14. Machine à tisser selon la revendication 12 ou 13, dans lequel le canal de guidage (11) est formé, au moins partiellement, par une pluralité de dents d'un peigne (10).

15. Machine à tisser selon l'une quelconque des revendications 12 à 14, comprenant en outre un dispositif de commande (300) configuré pour déterminer un moment correspondant au moment où la présence d'une extrémité avant du fil de trame est détectée dans au moins la première zone (Z1) et la deuxième zone (Z2).
